# EUROPEAN PATENT SPECIFICATION

(11) **EP 1 090 047 B1**
(45) Date of publication and mention of the grant of the patent: **04.08.2004**
(21) Application number: 99912885.3
(22) Date of filing: 24.03.1999
(51) Int. Cl.: C08F 10/00, C08F 4/64, C08F 2/14

(54) **POLYMERIZATIONS USING ADJUVANT CATALYST**
POLYMERISATION UNTER VERWENDUNG MEHRERER KATALYSATOREN
POLYMERISATIONS A L'AIDE DE CATALYSEUR AUXILIAIRE

(30) Priority: 06.05.1998 US 84558 P
(43) Date of publication of application: 11.04.2001
(73) Proprietor: Huntsman Polymers Corporation, Salt Lake City, UT 84108 (US)
(72) Inventor: SUN, Lixin, Odessa, TX 79762 (US)
(74) Representative: Winkler, Andreas, Dr.
(86) International application number: PCT/US1999/006486
(87) International publication number: WO 1999/057164

(56) References cited:
- EP-A- 0 436 399
- EP-A- 0 536 104
- EP-A- 0 643 084
- WO-A-96/14154
- WO-A-97/31035
- DE-A- 1 495 464

## Description

### TECHNICAL FIELD

This invention relates generally to a method for producing low-crystallinity polyolefins. The invention relates more particularly to a method for producing sticky polyolefins that normally adhere to the walls of the reactor in which they are produced to such degree that such polyolefins are considered by those skilled in the art as being impossible to manufacture and process in commercially significant quantities.

### BACKGROUND INFORMATION

The polymerization of various olefins, including propylene and ethylene, has been known in the chemical art for quite some time. Generally speaking, in order to polymerize an olefin, one provides the olefin to be polymerized and contacts the olefin monomer with a catalytic material under sufficient conditions of temperature and pressure to cause polymerization of the monomer. The conditions of temperature and pressure may be varied, as well as the type of reaction vessel in which the polymerization is carried out.

One process for polymerization of olefins including, but not limited to propylene is known as the slurry process. In the slurry process, an inert organic solvent is fed into a closed reaction vessel and typically heated, with stirring. Then, a monomeric raw material is fed into the reaction vessel wherein some of the monomer dissolves in the solvent Catalyst is fed to the stirred reactor and the monomer becomes polymerized. Polymer and solvent may be removed as a slurry, provided that the polymer, by its very nature, has no tendency to stick to the reactor walls, through a pipe in one of the sides or bottom of the reactor. The polymer is then separated by the solvent using means well known to those skilled in the polymer art, and the solvent is recycled. The process may be conducted as a batch process, and the monomer itself may function as the solvent, as in the case when propylene is employed under conditions in which it exists in the liquid state.

High molecular weight amorphous and low-crystallinity polyolefins are commercially important for their use in diverse products due to the unique combination of chemical and physical properties they possess, including chemical inertness, softness, flexibility, recyclability. Industrial interest in these materials has increased in recent times by the development of catalysts to produce them.

A number of patents disclose catalysts and processes to prepare amorphous or elastomeric polyolefins, including US Pat. Nos. 4,524,195 ; 4,736,042 ; 4,9713,936 ; 4,335,225 ; 5,118,768; 5,247,032; 5,565,532; 5,608,018; and 5,594,080 , as well as European Patents EP 604908 and 693506. For purposes of this specification and the appended claims, the words "substantially amorphous" mean, when referring to polyolefins, those having less than about 70 Joules per gram of crystallinity as measured using Differential Scanning Calorimitry according to ASTM method D-3417.

While the production of various high molecular weight amorphous polymers is possible owing to the relatively recent development of several catalysts therefor, it has been an ongoing problem in this art nevertheless that the harvest of these amorphous polyolefins from a reactor operated in liquid pool slurry processes has been thus far impossible to carry out on a commercial scale. This is because these sticky polymers typically tend to agglomerate on the walls of the reactor in which they are produced, thus touting the reactor. A coating of polymer on the walls of a reactor reduces heat transfer capability between the walls of the vessel and the contents of the vessel, which in turn results in a reduced degree of control of the reaction conditions. Such a loss of control of reaction temperature can have devastating consequences on the condition of the reactor as well as the products produced therein. Typically, it is necessary to open the reactor and mechanically scrape the walls of the reaction vessel in order to remove the fouled material. Production of such "fouling" material is therefore viewed by those skilled in the art as being generally undesirable, regardless of the properties of the polymeric materials so produced. This translates to a reduced potential for merchants of commerce to benefit the public by supplying polymers having hitherto unobserved and special physical properties. As used in this specification and the appended claims the words "fouling polymer" means a polyolefin polymer which adheres to the walls of the reactor in which it is produced to such an extent that commercial production of the polymer is hindered by reactor maintenance and cleansing requirements extraordinary with respect to those normally required for producing polymers which do not substantially adhere to the walls of the reactor in which they are produced, either in technique or frequency.

World Patents 96/11963 and 96/16996 describe solution processes for producing amorphous polyolefins. However, the processes therein set forth have the disadvantages of limitations on the viscosity, solids content, and include the use of one or more solvents, thus necessitating provisions for solvent recovery.

WO/9731035 discloses supported metallocene catalyst systems and methods for their production and use. The method comprises the steps of combining support material and a first solution comprising a first metallocene; drying the mixture thereby forming supported first metallocene; then combining the supported fitst metallocene with a second solution comprising a second metallocene wherein the second metallocene is different from the first; and then drying the resulting mixture. Both the first and the second metallocene are supported on support material.

DE-A-1495464 discloses a process for the preparation of polyolefins with high molecular weight and high stereoregularity. A catalyst system used comprises a component of at least one transition metal of the groups IV-B, V-B, VI-B, VII-B or VIIF of the periodic system of the elements, and a metal organic component containing at least one transition metal additionally to the usual non transition metal. Due to the high stereoregularity and the high molecular weight the resulting polymer is non-sticky and the handling of the polymer should be easy.

### INVENTION SUMMARY

In accordance with the foregoing disadvantages associated with catalysts and processes in the prior art which tend to produce polymers that substantially adhere to the walls of the vessel in which they are produced using a slurry process, it is an object of the instant invention to provide a method whereby polymers which normally adhere to reactor walls are caused to be inert with respect to such adhesion.

The reactor fouling caused by agglomeration of sticky, amorphous polymer is eliminated or reduced in accordance with the instant invention by introduction of a specified amount of fine powder dispersed in the reaction medium. The powder is believed to coat the surface of the sticky, amorphous polymer particles to produce a less sticky surface having a reduced tendency to adhere to the reactor wall. In order to be effective towards this end, the powder must be of a small particle size, and be non-sticky itself An additional requirement of the powder is that it must not interfere or poison the catalyst, nor influence the physical properties of the sticky amorphous polymer in any adverse way.

Therefore, the invention hereof consists in improving a process for olefin polymerization which employs a first catalyst for producing a substantially amorphous fouling polymer, wherein the improvement comprises the presence in the polymerization reactor of an effective amount of a unsupported second catalyst which produces polyolefin powder simultaneously with said first catalyst to provide a powder polymer coating of the amorphous polymer during amorphous polymer formation so as to eliminate or substantially reduce the tendency of solid amorphous polymer to adhere to the walls of the polymerization reactor.

Preferably, the powder is a polymer which is produced in-sitn, in the reactor in which the polymerization of the olefin is carried out. This is preferably accomplished in accordance with this invention by the introduction of a special catalyst component which produces the desired powdery polymer without adversely affecting the performance of the main catalyst used for the olefin polymerization. Thus, the instant invention comprises a mixed catalyst system which produces two different polymers from the same monomeric raw material -the main sticky polymer, produced by the main catalyst; and the powdery polymer (which reduces the adhesion affinity of the main sticky polymer for the reactor walls) produced using the adjuvant unsupported catalyst.

### DETAILED DESCRIPTION

The examples below are illustrative, but not delimiting, of the process of this invention. They show how the catalytic material Dimethylsitylbis(1-indenyl) zirconium dichloride functions to produce powdery polymers in accordance with this invention, simultaneously with other catalysts which produce sticky, amorphous polypropylenes. The effect of the catalyst which produces powdery polymers is to render the amorphous, sticky polymers inert with respect to adhesion to the walls of the reactor. For purposes of this specification and the appended claims, the word "powder" means a polymer which exists in a particulant form comprising a plurality of particles immediately upon its being produced in a reactor from at least one monomeric raw material, wherein the average size of the particles is below 100 microns. Preferably, the average particle size is less than 50 microns, more preferably, less than 40 microns, and most preferably, the average size of the particles is less than 30 microns.

### Comparative Example I- Preparation of Fine Powder Polymer

A one-liter autoclave reactor equipped with a mechanical stirrer was purged with dry nitrogen and then with propylene in order to flush out residual atmospheric components. Then, 1.0 milligram of Dimethylsilylbis(1-indenyl) zirconium dichloride and 4.45 millimoles of modified methylaluminoxane (MMAO-4 from Akzo Chemicals Inc. of 300 S. Riverside Plaza, Chicago, IL 60606) were charged into the reactor, followed by the addition of 330 grams of liquid propylene. The reactor was heated and maintained at 50 degrees Centigrade for one hour under a fair amount of, but not vigorous, agitation. After venting off the unreacted monomer, 112 grams of crystalline fine polypropylene powder was recovered. The average particle size for the powder was about 30 microns by microscopic observation.

### Comparative Example 2 - Preparation of Amorphous Polypropylene (sticky main polymer)

The same polymerization procedure as described in comparative Example 1 was Employed. 1.5 milligrams (mg) of (Tetramethylcyclopentadienyl-1-dimethylsilyl-t-butylamido) titanium was added to the reactor, followed by the addition of 330 grams of liquid propylene. The temperature of the reactor was maintained at 50 degrees centigrade for one hour. Visual observation through a sightglass in the reactor showed that the polymer formed had no particle form in the reaction medium and appeared to be gummy, semi-transparent, and stuck on the sightglass.

### EXAMPLE 1 - Non-adhering Amorphous Polypropylene, Prepared with Powdery Polymer in situ

The same polymerization procedure as described in Example 2 was Employed. 1.2 milligrams (mg) of (Tetramethylcyclopentadienyl-1-dimethylsilyl-t-butylamido)titanium dichloride and 0.3 mg of Dimethylsilylbis(1-indenyl) zirconium dichloride and 5.6 millimoles of MMAO (AKZO MMAO-4) were added to the reactor, followed by the addition of 330 grams of liquid propylene. The temperature of the reactor was maintained at 50 degrees centigrade for one hour. Visual observation through a sightglass in the reactor showed that the reaction medium appeared milky and contained a large amount of fine white particles as well as some larger (1-2 mm) white particles. Upon stopping the agitation, all particles fell down to the bottom and no polymer stuck to the window or the walls, None of the polymer was observed to be sticking to the sightglass or the reactor walls. It was clear that the presence of the Dimethylsilylbis (1-indenyl) zirconium dichloride and the MMAO had permitted production of the other sticky polymer without any of the latter becoming fouled on the reactor walls.

### Example 2

The same polymerization as in Example 1 was carried out using identical conditions except that 1.4 mg of (Tetramethylcyclopentadienyl-1-dimethylsilyl-t-butylamido) titanium dichloride and 0.1 mg of Dimethylsilylbis(1-indenyl)zirconium dichloride were employed.

### Example 3

The same polymerization as in Example 1 was carried out using identical conditions except that 1.45 mg of (Tettamethylcyclopeutadienyl-1-dimethylsilyl-t-butylamido) titanium dichloride and 0.05 mg of Dimethylsilylbis(1-indenyl)zirconium dichloride were employed.

### Example 4

The same polymerization conditions as in Example 1 were employed using identical conditions except that 4.0 mg of Dimethylsilylbis (9-fluorenyl)zirconium, 0.3 mg of Dimethylsilylbis(1-indenyl)zirconium dichloride and 8.5 millimoles of MMAO-4 were employed as catalysts for propylene polymerization. The observation was the same as for Example 1 - the reaction mixture was composed of tiny white particles and larger irregularly-shaped particles, which were well dispersed in the medium and not sticking to the walls of the reactor.

### Comparative Example 3

The same polymerization as in Example 4 was carried out using identical conditions except that the Dimethylsilylbis(1-indenyl)zirconium chloride was omitted. The polymer produced had no evidence of a particulant nature present, appeared to be gummy, was semi-transparent and adhered strongly to the walls of the reactor.

It was observed in Examples 2 and 3 that as the amount of Dimethylsilylbis (1-indenyl)zirconium was reduced, the reaction medium became less milky, indicating the presence of fewer particles of powdery polymer. This change was attended by a pendant increase in the size of the particles of amorphous polymer present. This establishes the relationship between the presence of the catalyst which produces powdery polymer and the tendency for the amorphous material simultaneously produced to stick to the reactor walls.

There will always be a minimum preferred amount of powder-producing catalyst which is to be added to a given system in order to confer operability on the system, i.e., the ability of the system to produce continuously and in large quantity what would otherwise be a fouling polymer. As far as determining what the preferred relative amount of powder-producing catalyst to main polymer-producing catalyst present in the reactor is, the relative activity of the powder-producing catalyst as compared to that of the sticky polymer-producing catalyst is a factor. As the activity of the powder-producing polymer increases, the amount necessary for conferring operability to the system decreases. The ratio of powdery polymer to sticky polymer is important This is dependent on the degree of stickiness of the sticky polymer. The more sticky the sticky polymer, the more powdery polymer will be required.

Typically, it is desired that the powdery polymer is produced in an amount equal to between about 1 % and 60 % of that of the total polymer produced in the presence of both types of catalysts. More preferably, the powdery polymer constitutes between about 3 and 40 (and every whole integer therebetween) percent of the total polymer produced. Generally speaking, the operability of a two catalyst system as disclosed herein increases as the amount of powder present increases. As long as the powdery polymer does not adversely affect the desired properties of the sticky polymer, any level of powdery polymer which is effective for producing sticky polymers without reactor fouling is satisfactory for achieving the objects of conferring operability to an otherwise fouled system.

## Claims

1. In a process for olefin polymerization which employs a first catalyst for producing a substantially amorphous fouling polymer, wherein the improvement comprises: the presence in the polymerization reactor of an effective amount of a unsupported second catatyst which produces polyolefin powder having an average particle size below 100 microns simultaneously with said first catalyst to provide a powder polymer coating of the amorphous polymer during amorphous polymer formation so as to eliminate or substantially reduce the tendency of solid amorphous polymer to adhere to the walls of the polymerization reactor.

2. The process according to claim 1 wherein said first catalyst is either homogeneous or supported and is selected from the group of: metallocene catalysts, Ziegler-Natta catalysts, single-site catalysts.

3. The process according to claim 1 wherein said unsupported second catalyst produces olefin polymer particles having an average size of 100 microns or less.

4. The process according to claim 1 wherein said unsupported second catalyst produces olefin polymer particles having an average size of 50 microns or less.

5. The process according to claim 1 wherein said unsupported second catalyst produces olefin polymer particles having an average size of 30 microns or less.

6. The process according to claim 1 wherein said unsupported second catalyst comprises an organometallic compound including at least one metal selected from the group consisting of titanium, zirconium, and hafnium.

7. The process according to claim 6 wherein said unsupported second catalyst comprises an aromatic organosilicon ligand having a cyclopentadienyl portion coordinated to at least one metal selected from the group consisting of: titanium, zirconium, and hafnium.

8. The process according to claim 7 wherein said unsupported second catalyst comprises a dihalide of an organozirconium compound.

9. The process according to claim 1 wherein said unsupported second catalyst is an organometallic compound which includes an indenyl ligand, substituted or unsubstituted, coordinated to a metal selected from the group consisting of. titanium, hafnium, or zirconium.

10. The process according to claim 9 wherein said unsupported second catalyst is selected from the group consisting of: Rac-ethylenebis(1-indenyl)zirconium dichloride and Dimethylsilylbis(1-indenyl)zirconiumdichloride.

## Patentansprüche

1. Verfahren zur Olefinpolymerisation, welches einen ersten Katalysator zum Herstellen eines im wesentlichen amorphen, anwachsenden Polymers verwendet, wobei die Verbesserung umfaßt: gleichzeitig mit dem ersten Katalysator die Gegenwart in dem Polymerisationsreaktor einer effektiven Menge eines nicht-geträgerten zweiten Katalysators, welcher Polyolefinpulver mit einer durchschnittlichen Teilchengröße von unter 100 µm erzeugt, um ein Pulverpolymer bereitzustellen, welches das amorphe Polymer während der Bildung des amorphen Polymers beschichtet, um so die Tendenz von festem amorphen Polymer zu eliminieren oder im wesentlichen zu vermindern, um an den Wänden des Polymerisationsreaktors anzuhaften.

2. Verfahren nach Anspruch 1, **dadurch gekennzeichnet, daß** der erste Katalysator entweder homogen oder geträgert ist und ausgewählt ist aus der Gruppe aus: Metallocen-Katalysatoren, Ziegler-Natta-Katalysatoren, Single-Site-Katalysatoren.

3. Verfahren nach Anspruch 1, **dadurch gekennzeichnet, daß** der nicht-geträgerte zweite Katalysator Olefinpolymerteilchen mit einer durchschnittlichen Größe von 100 µm oder weniger erzeugt.

4. Verfahren nach Anspruch 1, **dadurch gekennzeichnet, daß** der nicht-geträgerte zweite Katalysator Olefinpolymerteilchen mit einer durchschnittlichen Größe von 50 µm oder weniger erzeugt.

5. Verfahren nach Anspruch 1, **dadurch gekennzeichnet, daß** der nicht-geträgerte zweite Katalysator Olefinpolymerteilchen mit einer durchschnittlichen Größe von 30 µm oder weniger erzeugt.

6. Verfahren nach Anspruch 1, **dadurch gekennzeichnet, daß** der nicht-geträgerte zweite Katalysator eine organometallische Verbindung umfaßt, die wenigstens ein Metall einschließt, das ausgewählt ist aus der Gruppe bestehend aus Titan, Zirconium und Hafnium.

7. Verfahren nach Anspruch 6, **dadurch gekennzeichnet, daß** der nicht-geträgerte zweite Katalysator einen aromatischen Organosiliciumliganden mit einem Cyclopentadienylteil umfaßt, koordiniert an wenigstens einem Metall, das ausgewählt ist aus der Gruppe bestehend aus: Titan, Zirconium und Hafnium.

8. Verfahren nach Anspruch 7, **dadurch gekennzeichnet, daß** der zweite nicht-geträgerte Katalysator ein Dihalogenid einer Organozirconiumverbindung umfaßt.

9. Verfahren nach Anspruch 1, **dadurch gekennzeichnet, daß** der zweite nicht-geträgerte Katalysator eine organometallische Verbindung ist, welche einen Indenylliganden, substituiert oder nicht-substituiert, einschließt, koordiniert an einem Metall, das ausgewählt ist aus der Gruppe bestehend aus: Titan, Hafnium oder Zirconium.

10. Verfahren nach Anspruch 9, **dadurch gekennzeichnet, daß** der zweite nicht-geträgterte Katalysator ausgewählt ist aus der Gruppe bestehend aus: Rac-Ethylenbis(1-indenyl)zirconiumdichlorid und Dimethylsilylbis(1-indenyl)zirconiumdichlorid.

## Revendications

1. Procédé de polymérisation d'oléfine qui utilise un premier catalyseur pour produire un polymère anti-encrassage essentiellement amorphe, l'amélioration comprenant : la présence dans le réacteur de polymérisation d'une quantité efficace d'un deuxième catalyseur sans support qui produit des poudres de polyoléfine présentant une taille moyenne de particule inférieure à 100 microns, simultanément avec ledit premier catalyseur pour fournir un revêtement polymère en poudre du polymère amorphe pendant la formation du polymère amorphe de façon à éliminer ou essentiellement réduire la tendance du polymère solide amorphe à adhérer aux parois du réacteur de polymérisation.

2. Procédé selon la revendication 1, dans lequel ledit premier catalyseur est soit homogène soit à support et est choisi dans le groupe constitué de catalyseurs métallocènes, de catalyseurs Ziegler-Natta, de catalyseurs monosite.

3. Procédé selon la revendication 1, dans lequel ledit deuxième catalyseur sans support produit des particules polymère d'oléfine présentant une taille moyenne de 100 microns ou inférieure.

4. Procédé selon la revendication 1, dans lequel ledit deuxième catalyseur sans support produit des particules polymère d'oléfine présentant une taille moyenne de 50 microns ou inférieure.

5. Procédé selon la revendication 1, dans lequel ledit deuxième catalyseur sans support produit des particules polymère d'oléfine présentant une taille moyenne de 30 microns ou inférieure.

6. Procédé selon la revendication 1, dans lequel ledit deuxième catalyseur sans support comprend un composé organométallique comprenant au moins un métal choisi dans le groupe constitué de titane, de zirconium et de hafnium.

7. Procédé selon la revendication 6, dans lequel ledit deuxième catalyseur sans support comprend un coordinat d'organosilicium aromatique présentant une fraction cyclopentadiényle coordonnée à au moins un métal choisi dans le groupe constitué de titane, de zirconium et de hafnium.

8. Procédé selon la revendication 7, dans lequel ledit deuxième catalyseur sans support comprend un composé dihalogénure d'un composé d'organozirconium.

9. Procédé selon la revendication 1, dans lequel ledit deuxième catalyseur sans support est un composé organométallique qui comprend un coordinat d'indényle, substitué ou non substitué, coordonné à un métal sélectionné dans le groupe constitué de titane, d'hafnium ou de zirconium.

10. Procédé selon la revendication 9, dans lequel ledit deuxième catalyseur sans support est choisi dans le groupe constitué de rac-éthylène-bis(1-indényl)zirconium dichlorure et le diméthylsilyl-bis(1-indényl)zirconium dichlorure.
